# EUROPEAN PATENT APPLICATION

(11) **EP 3 989 139 A1**
(43) Date of publication of application: **27.04.2022**
(21) Application number: 20826375.6
(22) Date of filing: 19.06.2020
(51) Int. Cl.: G06Q 10/06, G06Q 50/00

(54) **COMPUTER SYSTEM, PROGRAM, AND METHOD FOR PROVIDING ADVICE ON OPTIMAL WAY OF COMMUNICATING WITH EACH INDIVIDUAL PARTNER**

(30) Priority: 20.06.2019 JP 2019114826
(71) Applicant: KAKEAI, Inc., Tokyo 1020084 (JP)
(72) Inventor: HONDA, Hidetaka, Tokyo 107-0052 (JP); MINAGAWA, Emi, Tokyo 107-0052 (JP); KOYASU, Akira, Tokyo 107-0052 (JP); KANEDA, Junya, Tokyo 107-0052 (JP); ANDO, Yoshio, Tokyo 107-0052 (JP)
(74) Representative: Uexküll & Stolberg
(86) International application number: PCT/JP2020/024151
(87) International publication number: WO 2020/256108

(57) **Abstract**

This computer system comprises a reception means for receiving the characteristic of a member in an organization, a determination means for determining that the member is in a certain situation among a plurality of situations, an acquisition means for acquiring an evaluation by a first person on communication done to the first person in the past, and an output means for outputting advice on communication to the member under the situation on the basis of the situation, the characteristic of the member, and the evaluation.

## Description

### [Technical Field]

The present invention relates to a computer system, program, or method for providing an advice to a user. More specifically, the present invention relates to a computer system, program, or method for providing an advice on communication.

### [Background Art]

A system for analyzing a status of a member in an organization and providing an advice on action to improve the status of the member and the organization is known (Patent Literature 1). The system provides an advice on how the member should act in the organization based on the difference between the status of the member and the status of the organization.

### [Citation List]

### [Patent Literature]

[PTL 1] International Publication No. WO 2011/125272

### [Summary of Invention]

### [Technical Problem]

The inventors of the invention found that it is effective to provide an advice by considering the difference in characteristics from the other party in communication, the state of the other party, and/or how the other party feels in addition to, or instead of, the characteristics of the entire organization when providing an advice on communication between a plurality of members cooperating in the organization. By providing an advice on communication by focusing on the difference in characteristics from the other party in communication, the state of the other party, and/or how the other party feels instead of averaging the characteristics of a plurality of members, a member receiving the advice can communicate while being cognizant of the difference from the other party and make improvements to shortcomings in communication.

The objective of the present invention is to provide a computer system, program, or method for providing an advice on communication, which is capable of making improvements to shortcomings in communication.

Another objective of the present invention is to provide a computer system, program, or method for providing an advice on communication based on objective analysis instead of an indefinite variable element such as a rule of thumb, feeling, or subjective understanding.

### [Solution to Problem]

The present invention provides a computer system for providing an advice on a communication, the computer system comprising: receiving means for receiving a characteristic of a member within an organization; determination means for determining that the member is in a state among a plurality of states; obtaining means for obtaining evaluation by a first person on past communications to the first person; and outputting means for outputting an advice on a communication to the member in the state based on the state, the characteristic of the member, and the evaluation.

In one embodiment of the invention, the first person has a characteristic that is identical or similar to the member in the organization.

In one embodiment of the invention, the past communications to the first person are past communications to the first person in the same state as the state.

In one embodiment of the invention, the outputting means obtains a communication associated with both the state and the characteristic of the member and outputs at least one of an advice stating that a communication among the obtained communications for which the evaluation is good is a communication that is effective for the member, and an advice stating that a communication among the obtained communications for which the evaluation is bad is a communication that is ineffective for the member.

In one embodiment of the invention, the outputting means rearranges and outputs the communications in ascending or descending order of the evaluation.

In one embodiment of the invention, the computer system further comprises second receiving means for receiving a characteristic of a manager within the organization, wherein the outputting means outputs, to the manager, an advice on a communication to the member in the state based on the state, the characteristic of the member, the characteristic of the manager, and the evaluation.

In one embodiment of the invention, the past communications to the first person were established by a second person, and the second person has a characteristic that is identical or similar to the manager.

In one embodiment of the invention, the determination means is configured to receive a report showing that the member is in a state among a plurality of states from another member within the organization, and to determine that the member is in a state among a plurality of states based on the received report.

In one embodiment of the invention, the determination means is configured to determine that the member is in a state among a plurality of states based on an action of the member.

The present invention provides a program for providing an advice on a communication, wherein the program is executed in a computer system comprising a processing unit, and the program causes the processing unit to execute processing comprising: receiving a characteristic of a member within an organization; determining that the member is in a state among a plurality of states; obtaining evaluation by a first person on past communications to the first person; and outputting an advice on a communication to the member in the state based on the state, the characteristic of the member, and the evaluation.

The present invention provides a method for providing an advice on a communication, wherein the method is executed in a computer system comprising a processing unit, and the method comprises: receiving a characteristic of a member within an organization; determining that the member is in a state among a plurality of states; obtaining evaluation by a first person on past communications to the first person; and outputting an advice on a communication to the member in the state based on the state, the characteristic of the member, and the evaluation.

### [Advantageous Effects of Invention]

The present invention can provide a computer system, program, or method for providing an advice on a communication, which is capable of making improvements to shortcomings in communication. This improves communication among members of an organization and promotes cooperation among members of the organization, leading to improved efficiency. The present invention can also promote efficiency in management of an organization.

The present invention can also provide a computer system, program, or method for providing an advice on a communication based on objective analysis. This enables elimination of advices based on an indefinite variable element such as a rule of thumb, feeling, or subjective understanding and enables suitable communication with a member of an organization.

### [Brief Description of Drawings]

[Figure 1A] Figure **1A** is a diagram showing an example of a survey table **10** for analyzing a characteristic of a member in an organization.
[Figure 1B] Figure **1B** is a diagram showing an example of a result display screen **20-1** for displaying a result of analyzing a response in the survey table **10** with the computer system of the invention.
[Figure 1C] Figure **1C** is a diagram showing an example of a result display screen **20-2** for displaying a result of analyzing a response in the survey table **10** with the computer system of the invention.
[Figure 2A] Figure **2A** is a diagram showing an example of report screen **30** for a member in an organization to report the status of each member to a manager using the computer system of the invention.
[Figure 2B] Figure **2B** is a diagram showing an example of a notification screen **40** for notifying that a member in an organization is in a negative state.
[Figure 3A] Figure **3A** is a block diagram showing an example of the configuration of the computer system **100** of the invention, which is capable of providing an advice on a communication.
[Figure 3B] Figure **3B** is a diagram showing an example of a data configuration stored in database unit **200.**
[Figure 3C] Figure **3C** is a block diagram showing an example of the configuration of a processing unit **120.**
[Figure 4] Figure **4** is a flowchart showing an example of processing **400** performed in the computer system **100** for providing an advice on a communication.
[Figure 5] Figure **5** is a diagram showing an example of a correspondence table **500** for determining a characteristic of a user.
[Figure 6] Figure **6** is a flowchart showing another example of processing (processing **600)** performed in the computer system **100** for providing an advice on a communication.

### [Description of Embodiments]

The embodiments of the invention are described hereinafter while referring to the diagrams.

### 1. Providing advice based on analysis on characteristic of a member of an organization

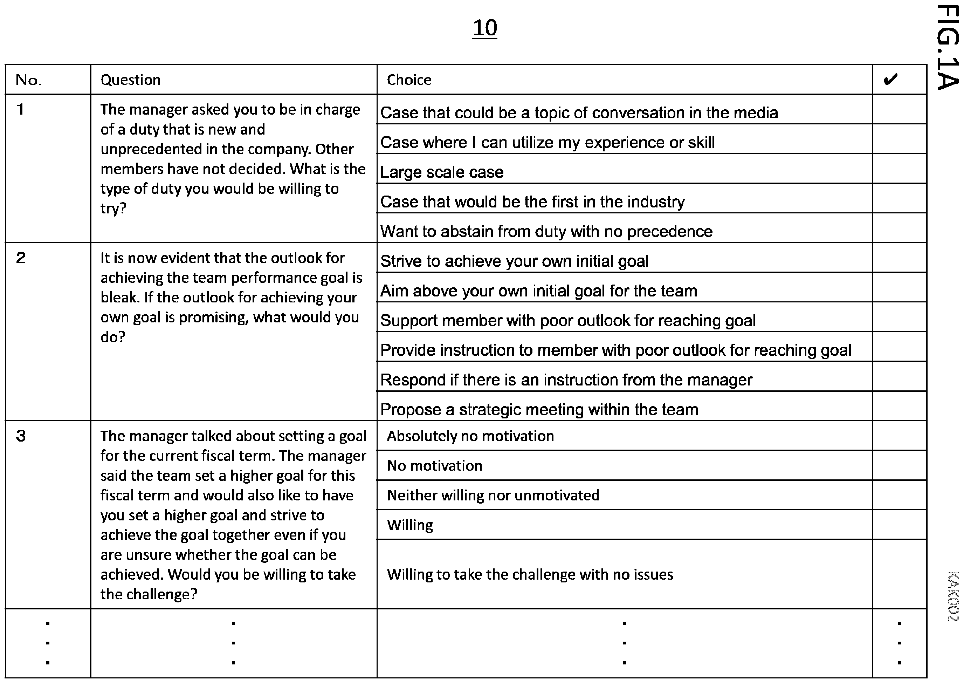

Figure **1A** shows an example of a survey table **10** that is used for analyzing a characteristic of a member in an organization.

The survey table **10** includes a plurality of questions, which are generally questions asking about an action chosen in a certain situation and questions asking about how a member feels about a certain situation. Each member in the organization responds to each question in a multiple choice format. A member responds by, for example, entering a check mark at the right end of the survey table **10** to select the relevant choice.

This example describes analysis of a work-related characteristic of a member in an organization. A question asking about an action chosen in a certain situation is, for example, "The manager asked you to be in charge of a duty that is new and unprecedented in the company. Other members have not made a decision yet. What is the type of duty you would be willing to try?", and a response is given from choices such as "Case that could be a topic of conversation in the media" and "Case where I can utilize my experience or skill". A question asking about an action chosen in a certain situation is, for example, "It is now evident that the outlook for achieving the team performance goal is bleak. If the outlook for achieving your own goal is promising, what would you do?", and a response is given from choices such as "Strive to achieve your own initial goal" and "Aim above your own initial goal for the team".

A question asking about how a member feels about a certain situation is, for example, "The manager talked about setting a goal for the current fiscal term. The manager said the team set a higher goal for this fiscal term and would also like to have you set a higher goal and strive to achieve the goal together even if you are unsure whether the goal can be achieved. Would you be willing to take the challenge?", and a response is given from five levels of choices from "Absolutely no motivation" to "Willing to take the challenge with no issues".

The questions and response choices thereof in the survey table **10** are merely exemplary. Other questions and response choices can be used. The number of choices can be any number that is two or greater.

The response of each member of the organization in the survey table **10** is inputted into the computer system of the invention and analyzed.

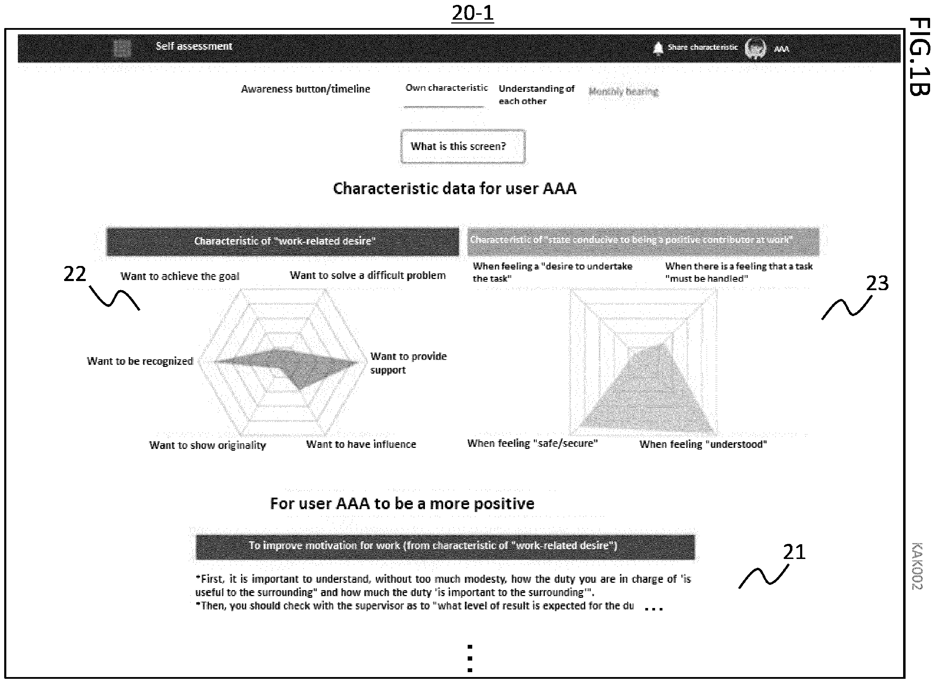

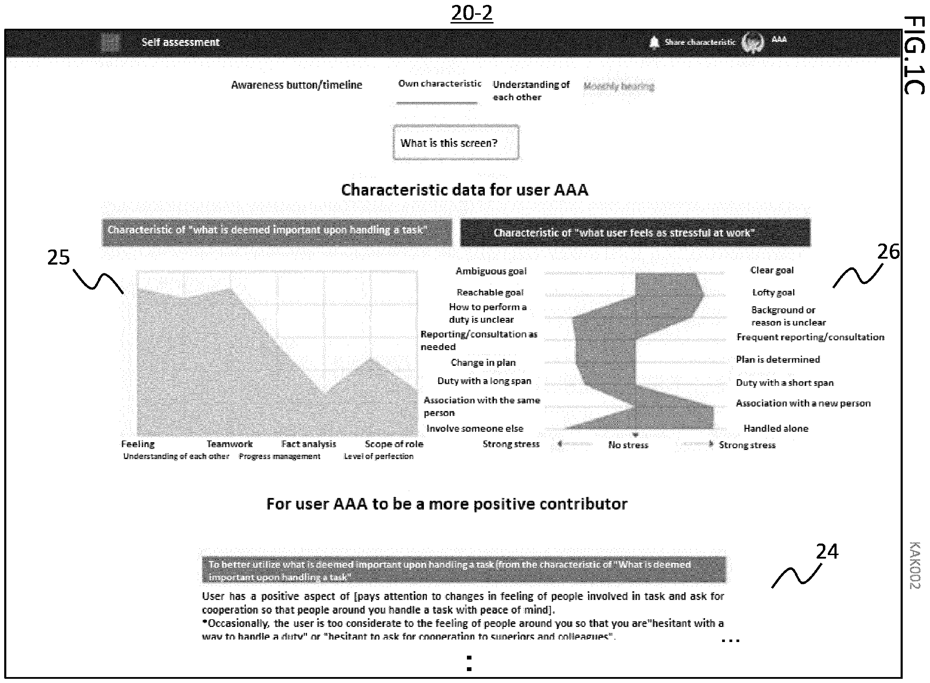

Figures **1B** and **1C** show an example of result display screens **20-1** and **20-2** for displaying a result of analyzing a response in the survey table **10** with the computer system of the invention. The result display screens **20-1** and **20-2** can be configured so that the result display screen **20-2** is displayed when the result display screen **20-1** is scrolled down, or can be configured to be displayed as separate screens.

As one example, the result display screens **20-1** and **20-2** display a result of analyzing the response of user AAA given in the survey table **10** by the computer system of the invention.

The result display screen **20-1** comprises, for example, a first display section **21,** a second display section **22,** and a third display section **23.** The first display section **21** is a section that displays an advice related to what user AAA should be cognizant of to become a more positive contributor based on the characteristic of user AAA determined from the response of user AAA. The second display section **22** is a section that displays a characteristic of desire of user AAA determined from the response of user AAA. In this regard, the characteristics of desire of user AAA are displayed in a radar chart with items "Want to solve a difficult problem", "Want to provide support", "Want to have influence", "Want to show originality", "Want to gain confidence", and "Want to achieve the goal" under the viewpoint of "Work-related desire". The third display section **23** is a section that displays a characteristic of an intracranial transmitter of user AAA determined from the response of user AAA. In this regard, the characteristics of the intracranial transmitter of user AAA are displayed in a radar chart with items "When there is a feeling that a task 'must be handled'", "When feeling 'understood'", "When feeling 'safe/secure'", and "When feeling a 'desire to undertake the task'" under the viewpoint of "state likely to result in being a positive contributor at work".

For example, the second display section **22** in Figure **1B** shows that user AAA has a high work-related desires such as "Want to provide support" and "Want to gain confidence". The third display section **23** in Figure **1B** shows that a task gets done briskly, for example, "When feeling 'understood'" and "When feeling 'safe/secure'" for user AAA.

For user AAA with such characteristics, the computer system of the invention determines, and displays on the first display section **21,** that user AAA should be cognizant of, for example, "understanding, without too much modesty, how the duty you are in charge of 'is useful to the surrounding' and how much the duty 'is important to the surrounding'" to become a positive contributor. In this regard, what the user should be cognizant of "in order to improve motivation at work" is displayed. For example, what the user should be cognizant of "in order to finish work briskly" can be displayed. This allows user AAA to receive an advice on what the user should be cognizant of to become a more positive contributor, simply by responding to the survey table **10.**

The result display screen **20-2** includes, for example, a fourth display section **24,** a fifth display section **25,** and a sixth display section **26.** The fourth display section **24** is a section that displays an advice related to what user AAA should be cognizant of to be a more positive contributor based on the characteristics of user AAA determined from a response of user AAA. The fifth display section **25** is a section that displays a characteristic of preference of user AAA determined from a response of user AAA. In this regard, the characteristics of preference of user AAA are displayed with an area graph with items "Feeling", "Understanding of each other", "Teamwork", "Progress management", "Fact analysis", "Level of perfection", and "Scope of role" under the viewpoint of "What is deemed important upon handling a task". The sixth display section **26** is a section that displays a characteristic of how user AAA feels stress determined from a response of user AAA. In this regard, characteristics of how user AAA feels stress are displayed with an area graph with items "Ambiguous goal", "Clear goal", "Reachable goal", "Lofty goal", "How to perform a duty is unclear", "Background or reason is unclear", "Reporting/consultation as needed", "Frequent reporting/consultation", "Change in plan", "Plan is determined", "Duty with a long span", "Duty with a short span", "Association with the same person", "Association with a new person", "Involve someone else", and "Handled alone" under the viewpoint of "What user feels as stressful at work".

For example, the fifth display section **25** in Figure **1C** shows that "feeling", "team work", and "understanding of each other" are deemed important upon handling a task for user AAA. The sixth display section **26** in Figure **1C** shows that user AAA feels stress from, for example, "How to perform a duty is unclear", "Association with a new person", "Determine alone", and "Involve someone else".

For user AAA with such characteristics, the computer system of the invention determines, and displays on the fourth display section **24,** that user AAA should be cognizant of, for example, "handling a duty so that the user can always have a vision of 'a goal can be achieved if what is brought to what status at what timing' to clear the goal or problem while consulting with superiors and colleagues" to become a more positive contributor. In this regard, "what the user should be cognizant of "to handle a task while alleviating stress" is displayed. For example, what the user should be cognizant of "to better utilize what is deemed important upon handling a task" can be displayed. This allows user AAA to receive an advice on what the user should be cognizant of to be a more positive contributor, simply by responding to the survey table **10.**

The above example describes that the computer system of the invention determines a characteristic of user AAA, and provides an advice to user AAA, but the computer system of the invention can also determine a characteristic for each member of the organization besides user AAA as shown in Figures **1B** and **1C** and provide an advice on what the members should be cognizant of to become a more positive contributor, based on the characteristics.

While the above example describes that a characteristic of a member of an organization is determined based on a response to the survey table **10,** the computer system of the invention can determine a characteristic of a member of an organization based on an action of the member of the organization. For example, a characteristic of a member of an organization can also be determined by capturing the action (motion) of the member of the organization through a camera and analyzing the action. A characteristic of a member of an organization can also be determined by capturing the action (motion) of the member of the organization through a microphone and analyzing the action.

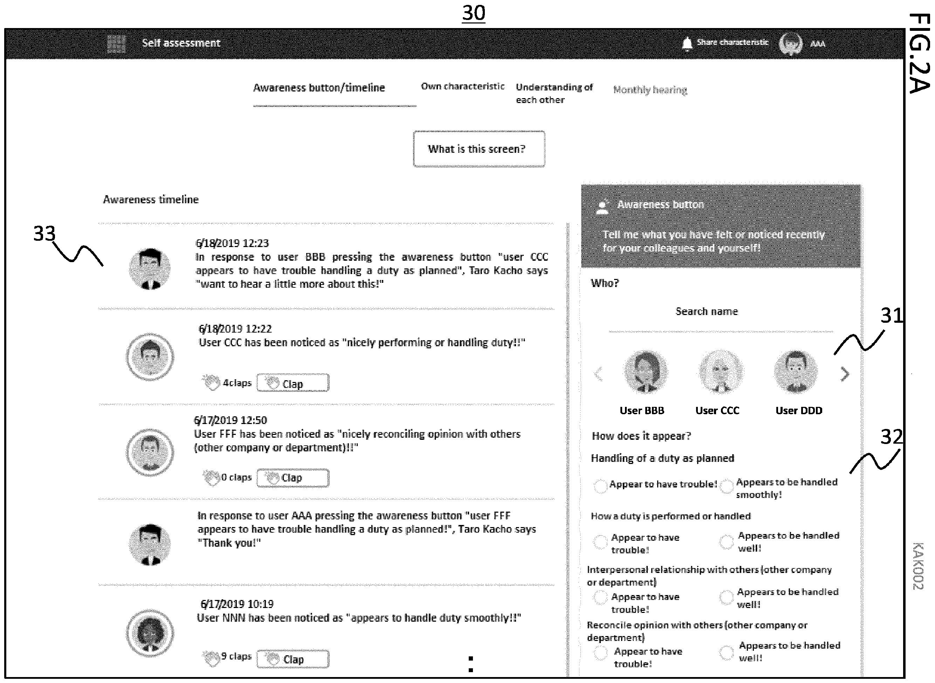

Figure **2A** shows an example of a report screen **30** for a member in an organization to report the status of each member to a manager using the computer system of the invention.

As an example, the report screen **30** displays a screen for user AAA to report the status of a member of a team.

The report screen **30** includes a member display section **31,** a selection section **32,** and an awareness timeline display section **33.** The member display section **31** is a section that displays members in an organization. The section can be configured to display all members in the organization or some of the members, such as members excluding those in a managerial position.

The member whose status user AAA wishes to report is selected from the member display section **31.** User AAA then selects one of a plurality of states for the status of the member, and selects whether the state is a positive state (good state) or a negative state (bad state). For example, if user AAA feels that user CCC is having trouble with how a duty is performed or handled, user AAA can report this to a manger by selecting user CCC from the member display section **31** and selecting the "Looks like having trouble!" button in the section of "How a duty is performed or handled" in the selection sections **32.** If, for example, user AAA feels that user LLL is becoming more willing to continue with the current task, user AAA can report this to a manager by selecting user LLL from the member display section **31** and selecting the "Looks more willing!" button in the section of "Continuation of current task" in the selection sections **32.** For example, user AAA can also self-report the user's own status. In such a case, user AAA is selected from the member display section **31** and a relevant button in the selection sections **32** is selected.

The plurality of states displayed on the report screen **30** is one example, so that other states can be used, such as a state of "Looks like having trouble!" or "Looks like things are going well!" with regard to "interpersonal relationship within the team", a state of "Looks like having trouble!" or "Progressing well!" with regard to "Reconciliation of opinions within the team", a state of "Looks like there is a concern!" or "Endeavoring energetically!" with regard to "Continuing the current task", a state of "Looks like not having concentration!" or "Looks like having concentration!" with regard to "Concentration to task at hand", or a state of "Does not look well!" or "Looks well!" with regard to "Status of mind and body". The state is not limited to two choices of good state and bad state. The number of choices can be any number that is 2 or greater. A state can also be evaluated and reported in multiple levels.

Reporting of the status of a member in an organization being a positive state (good state) can be notified to a manager and the member. This allows the manager to be aware of the state of the member in the organization and the member to have increased motivation. The status of a member in the organization reported as a negative state (bad state) can be notified to the manager, but not to the member.

The awareness timeline display section **33** chronologically displays reporting, by members within an organization, on the state of another member or the members themselves, and communication from a manager within the organization in response to the reporting. This allows a member within the organization to understand the state of other members and the communication made from the manager in response to the state.

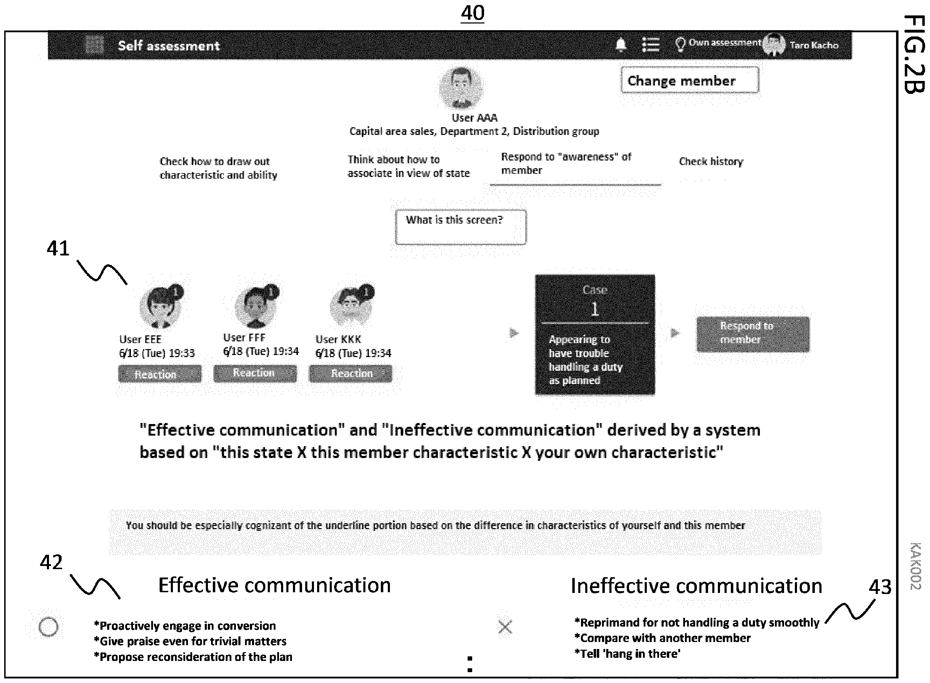

Figure **2B** shows an example of a notification screen **40** for notifying that a member in an organization is in a negative state.

As an example, the notification screen **40** displays a screen for notifying that user AAA is in a state where the user is having trouble with handling a duty as planned. The notification screen **40** can be displayed, for example, by a report indicating user AAA being in a negative state in the report screen **30** as a trigger. For example, the notification screen **40** can be configured to be viewable by only those with the authorization to manage the organization such as a manager.

The notification screen **40** includes a reporter display section **41,** a first advice display section **42,** and a second advice display section **43.**

The reporter display section **41** displays the person who reported user AAA as appearing to have trouble handling a duty as planned, where three members (user EEE, user FFF, and user KKK) are displayed. The reporter display section **41** can be configured to display, for example, only the number of persons who sent a report, or the name of the person reporting and the time of reporting.

The first advice display section **42** displays a communication that is effective for user AAA in the current state, based on the characteristic of user AAA. A communication that is effective for user AAA in the current state can be, for example, "Proactively engage in conversion", "Give praise even for trivial matters", "Propose reconsideration of the plan", or the like.

The second advice display section **43** displays a communication that is ineffective for user AAA in the current state, based on the characteristic of user AAA. A communication that is ineffective for user AAA in the current state can be, for example, "Reprimand for not handling a duty smoothly", "Compare with another member", "Tell 'hang in there'", or the like. In the example shown in Figure **2B**, communications that are effective and ineffective for user AAA in the current state are itemized and displayed, but such communications can be displayed, for example, as a sentence or a phrase.

A manager of an organization can communication with user AAA who is having trouble with smoothly handling a duty as planned by referring to communications that are effective and ineffective for user AAA displayed on the notification screen **40**. Furthermore, user AAA can evaluate and provide a feedback on whether communication from the manager was good or bad. For example, user AAA can input a received communication and evaluation thereof into an evaluation screen (not shown).

The communications that are effective displayed on the first advice display section **42** and communications that are ineffective displayed on the second advice display section 43 change in accordance with the characteristic of user AAA, state of user AAA, and evaluation by user AAA. Since this allows an effective communication and an ineffective communication to match the characteristic of a person, current state of the person, and how the person feels, a manager can receive an advice matching the characteristic of the person, current state of the person, and how the person feels instead of an advice based on a rule of thumb or feeling.

The above example describes that a state of a member within an organization is reported to a manager of the organization, and an advice on a communication with the member of the organization is provided to the manager of the organization, but the present invention is not limited thereto. It is within the scope of the invention to report a state of a member of an organization to any other member that is not limited to a manager of the organization and to provide an advice on a communication with the member of the organization to the another member. For example, the another member can be a colleague of the member within the organization. The colleague can be aware of what communication is effective or ineffective to the member in a specific state to have communication without shortcomings. As used herein, "communication" refers to any action of a person to another person, including non-action. For example, "communication" can include a conversation from a person to another person, no conversation from a person to another person, exhibition of a demeanor by a person to another person, no exhibition of a demeanor by a person to another person, movement of a person to another person, no movement of a person to another person, and the like.

The above examples describe analysis of a characteristic of a member in a work-related organization to provide an advice on work-related communication, but the present invention is not limited thereto. A characteristic of a member in any organization can be analyzed to provide an advice on a communication under any situation. For example, a characteristic of a member on a sports team can be analyzed to provide an advice on a communication during a sporting event or practice. For example, a characteristic of a member of a class at school can be analyzed to provide an advice on a communication during school activities.

The computer system **100** of the invention, which is capable of providing an advice on a communication as described above, is described hereinafter.

### 2. Configuration of computer system 100

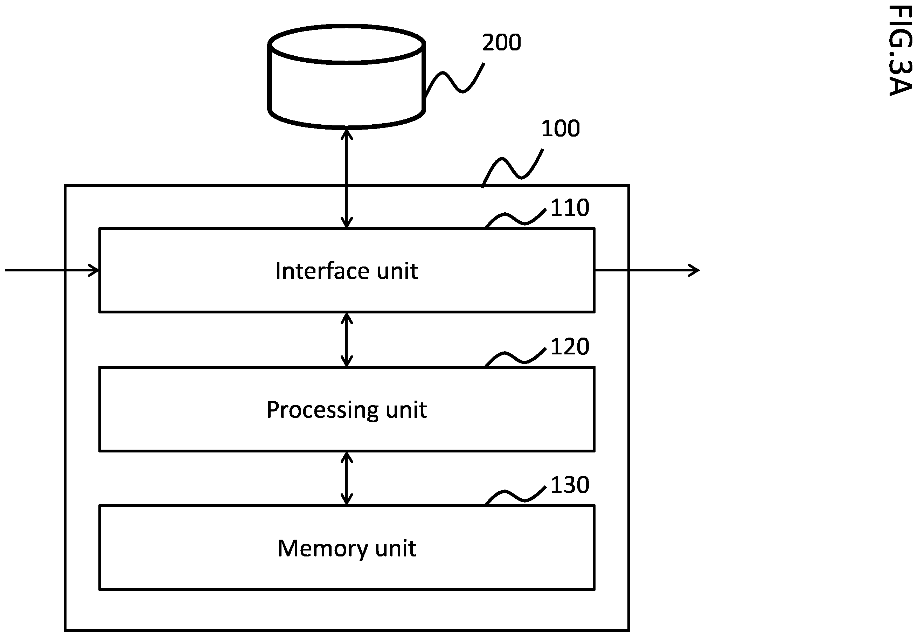

Figure **3A** shows an example of the configuration of the computer system **100** of the invention, which is capable of providing an advice on a communication.

The computer system **100** comprises an interface unit **110,** a processing unit **120,** and a memory unit **130.** The computer system **100** is connected to a database unit **200.**

The interface unit **110** exchanges information with an element that is external to the computer system **100.** The processing unit **120** of the computer system **100** can receive information from an element that is external to the computer system **100** via the interface unit **110** and transmit information to an element that is external to the computer system **100.** The interface unit **110** can exchange information in any form.

The interface unit **110** comprises, for example, an input unit that enables input of information into the computer system **100.** The input unit can enable input of information into the computer system **100** in any mode. If, for example, the input unit is a touch panel, the input unit can be configured so that a user inputs information by touching the touch panel. Alternatively, if the input unit is a mouse, the input unit can be configured so that a user inputs information by operating the mouse. Alternatively, if the input unit is a keyboard, the input unit can be configured so that a user inputs information by pressing a key on the keyboard. Alternatively, if the input unit is a microphone, the input unit can be configured so that a user inputs information by inputting an audio into the microphone. Alternatively, if the input unit is a camera, the input unit can be configured so that information captured by the camera is inputted. Alternatively, if the input unit is a data reader, the input unit can be configured so that information is inputted by reading out information from a storage medium connected to the computer system **100.** Alternatively, if the input unit is a receiver, the input unit can be configured so that the receiver receives information as an input from an element that is external to the computer system **100** via a network. In such a case, the network can be any type of network. For example, a receiver can receive information via the Internet, or via a LAN.

The interface unit **110** comprises, for example, an output unit that enables output of information from the computer system **100.** The output unit can enable output of information from the computer system **100** in any mode. If, for example, the output unit is a display screen, the output unit can be configured so that information is outputted to the display screen. Alternatively, if the output unit is a speaker, the output unit can be configured so that information is outputted by audio from the speaker. Alternatively, if the output unit is a data writer, the output unit can be configured so that information is outputted by writing information on a storage medium connected to the computer system **100.** Alternatively, if the output unit is a transmitter, the transmitter can output information by transmitting the information to an element that is external to the computer system **100** via a network. In such a case, the network can be any type of network. For example, a transmitter can transmit information via the Internet, or via a LAN.

The processing unit **120** executes processing of the computer system **100** and controls the overall operation of the computer system **100.** The processing unit **120** reads out a program stored in the memory unit **130** and executes the program, which can make the computer system **100** function as a system executing desired steps. The processing unit **120** can be implemented by a single processor or a plurality of processors.

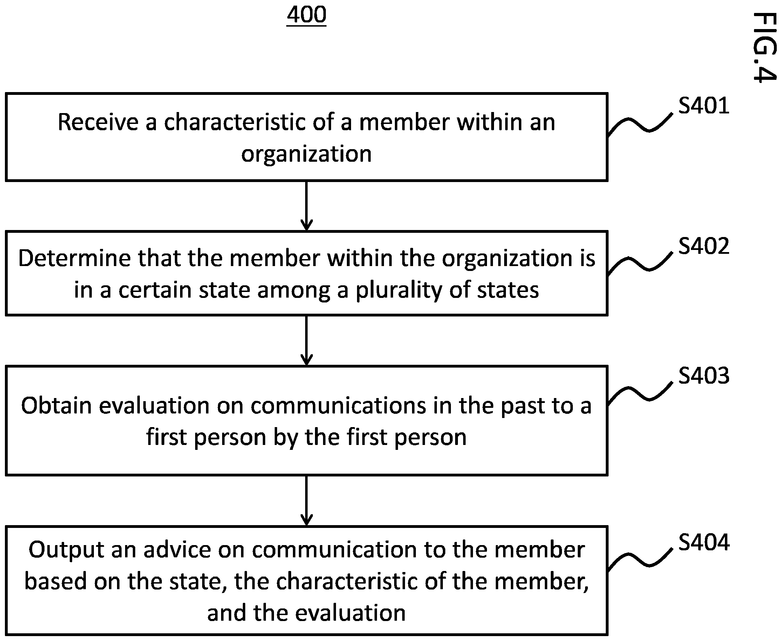

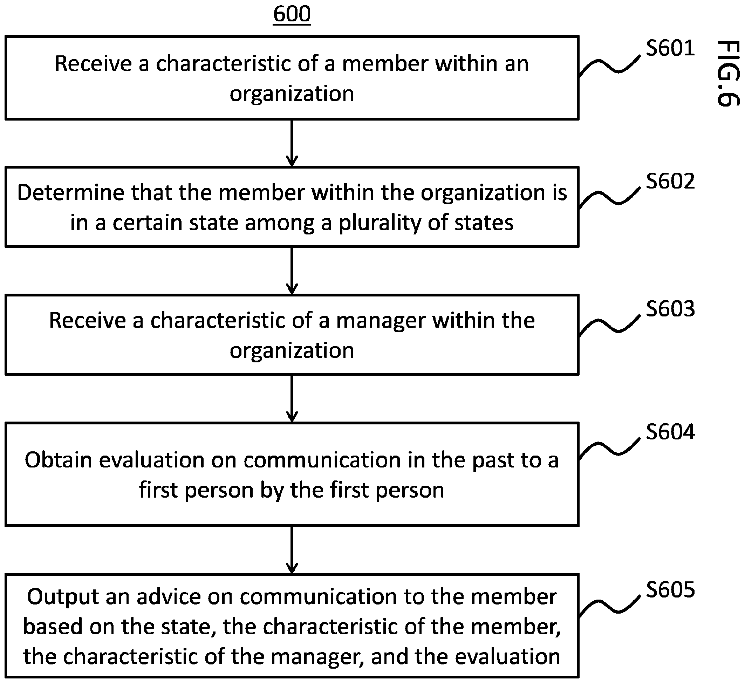

The memory unit **130** stores a program that is required for executing the processing of the computer system **100,** data required for executing the program, and the like. The memory unit **130** can store a program (e.g., program materializing the processing shown in Figure **4** or **6** described below) for instructing the processing unit **120** to perform processing for providing an advice on a communication. In this regard, a program can be stored in the memory unit **130** in any manner. For example, a program can be preinstalled in the memory unit **130.** Alternatively, a program can be installed in the memory unit **130** by downloading via a network. In such a case, the network can be any type of network. The memory unit **130** can be implemented by any storing means.

The database unit **200** stores, for example, advices that can be provided. An advice that can be provided can be stored, for example, after being associated with a characteristic of a member within an organization. If, for example, a characteristic of a member within an organization includes at least four viewpoints, an advice that can be provided is stored after being associated with at least one of at least four viewpoints. For example, the database unit **200** can store an advice for a member with a low score for a viewpoint, an advice for a member with a moderate score for a viewpoint, an advice for a member with a high score for a viewpoint, and the like for each viewpoint. For example, the database unit **200** can store an advice for a member/team with a large difference in scores for a viewpoint, an advice for a member/team with a small difference in scores for a viewpoint, and the like for each viewpoint. If, for example, each of the at least four viewpoints is further divided into a plurality of items, an advice that can be provided is stored after being associated with at least one of a plurality of items of each of the at least four viewpoints. For example, the database unit **200** can store an advice for a member with a low score for an item, an advice for a member with a moderate score for an item, an advice for a member with a high score for an item, and the like for each of the plurality of items of each viewpoint. For example, the database unit **200** can store an advice for a member/team with a large difference in scores for an item, an advice for a member/team with a small difference in scores for an item, and the like for each of the plurality of items of each viewpoint.

Advices stored in the database unit **200** can be stored, for example, after being associated with an attribute of an organization. For example, advices stored in the database unit **200** can be divided into advices for an organization in a primary sector of industry, advices for an organization in a secondary sector of industry, and advices for an organization in a tertiary sector of industry for storage. This allows different advices to be provided for organizations with different attributes.

In the database unit **200,** an advice that can be provided can be stored, for example, after being associated with a specific state among a plurality of states and a characteristic of a member of an organization.

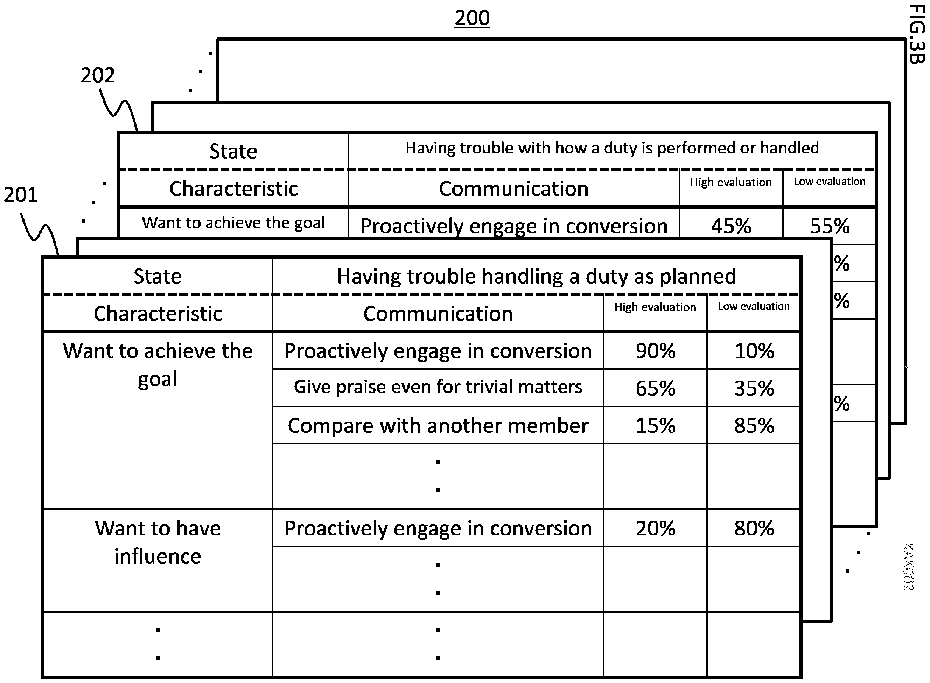

Figure **3B** is a diagram showing an example of data configuration stored in the database unit **200.**

For example, the database unit **200** can comprise a first database **201,** which stores characteristics of a member of an organization and communication to the member of the organization, which the first database **201** associates with a state of "Having trouble handling a duty as planned", and a second database **202,** which stores characteristics of a member of an organization and communication to the member of the organization, which the second database **202** associates with a state of "Having trouble with how a duty is performed or handled".

For example, each database can associate the stored date with a result of evaluating a communication when another member within an organization or a user outside of the organization having the same or similar characteristic receives the communication. If, for example, a plurality of other members within the organization or a plurality of users outside the organization with a characteristic of "Want to achieve the goal" receive a communication of "Proactively engage in conversion" in a state of "Having trouble handling a duty as planned", the ratio of people evaluating this communication as good to people evaluating this communication as bad can be stored in the first database **201** as 90:10. If, for example, a plurality of other members within the organization or a plurality of users outside the organization with a characteristic of "Want to achieve the goal" receive a communication of "Give praise even for trivial matters" in a state of "Having trouble handling a duty as planned", the ratio of people evaluating this communication as good to people evaluating this communication as bad can be stored in the first database **201** as 65:35. If, for example, a plurality of other members within the organization or a plurality of users outside the organization with a characteristic of "Want to have influence" receive a communication of "Proactively engage in conversion" in a state of "Having trouble handling a duty as planned", the ratio of people evaluating this communication as good to people evaluating this communication as bad can be stored in the first database **201** as 20:80.

An advice that can be provided can be stored, for example, after being associated with a characteristic of a person communicating with a member of an organization (e.g., manager of the organization or another member of the organization) in addition to a specific state among a plurality of states and a characteristic of the member in the organization.

In the example shown in Figure **3A****,** the database unit **200** is provided external to the computer system **100,** but the present invention is not limited thereto. The database unit **200** can also be provided inside the computer system **100.** At this time, the database unit **200** can be implemented by the same storing means as the storing means implementing the memory unit **130,** or by storing means that is different from the storing means implementing the memory unit **130.** In either case, the database unit **200** is configured as a storing unit for the computer system **100.** The configuration of the database unit **200** is not limited to a specific hardware configuration. For example, the database unit **200** can be configured as a single hardware part, or as a plurality of hardware parts. For example, the database unit **200** can be configured as an external hard disk apparatus of the computer system **100** or as a storage on the cloud connected via a network.

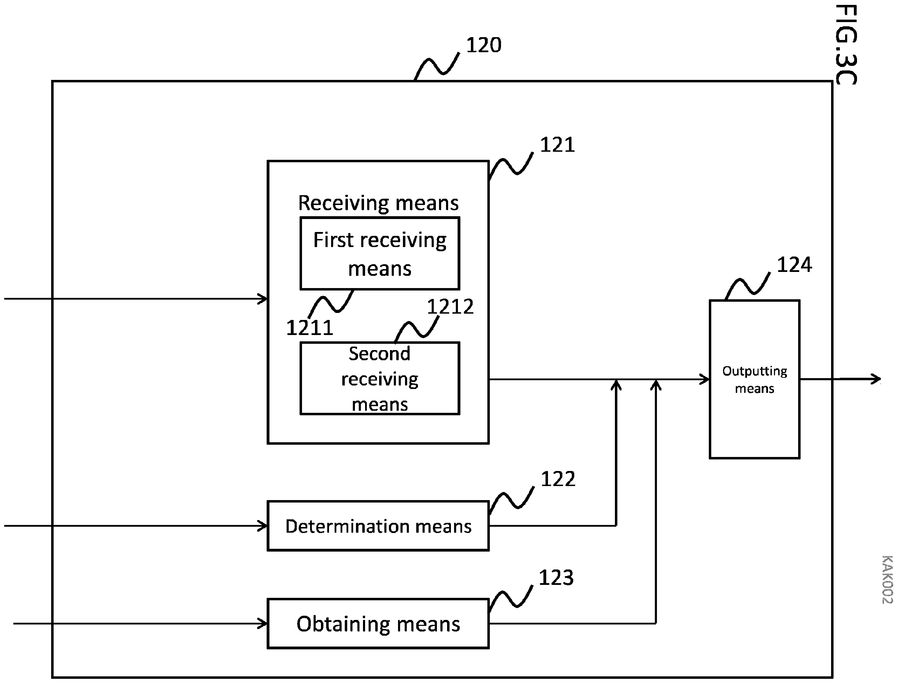

Figure **3C** shows an example of the configuration of the processing unit **120.**

The processing unit **120** comprises at least receiving means **121,** determination means **122,** obtaining means **123,** and outputting means **124.**

The receiving means **121** can be configured to receive information from the interface unit **110.**

The receiving means **121** can comprise first receiving means **1211** for receiving a characteristic of at least one member within an organization. The first receiving means **1211** can receive, for example, a characteristic of a member inputted into the computer system **100** via the interface unit **110** from the interface unit **110,** or a characteristic of a member within an organization determined by second determination means (not shown) that the processing unit **120** can comprise from the second determination means. At this time, the second determination means can receive data inputted into the computer system **100** via the interface unit **110** from the interface unit **110.**

The receiving means **121** can further comprise second receiving means **1212** for receiving a characteristic of at least one manager within an organization. For example, the second receiving means **1212** can receive, for example, a characteristic of a manager inputted into the computer system **100** from the interface unit **110,** or a characteristic of a manager determined by second determination means (not shown) that the processing unit **120** can comprise from the second determination means. At this time, the second determination means can receive data inputted into the computer system **100** via the interface unit **110** from the interface unit **110.**

The first receiving means **1211** and the second receiving means **1212** of the receiving means **121** can be comprised of the same receiving means or a plurality of receiving means.

The determination means **122** can be configured to determine that a member within an organization is in a state among a plurality of states. For example, the determination means **122** can determine that a member within an organization is in a state among a plurality of states in accordance with data inputted into the computer system **100** via the interface unit **110.** When, for example, a member within an organization inputs a report indicating that the member within the organization is in a specific state into the member's own terminal apparatus (e.g., personal computer, smart phone, or the like), the determination means **122** receives the report via the interface unit **110** and determines that the member is in a specific state based on the report. Alternatively, when, for example, another member within the organization inputs a report indicating that the member within the organization is in a specific state into the another member's own terminal apparatus (e.g., personal computer, smart phone, or the like), the determination means **122** receives the report via the interface unit **110** and determines that the member is in a specific state based on the report. Alternatively, when, for example, a manager within the organization inputs a report indicating that the member within the organization is in a specific state into the manager's own terminal apparatus (e.g., personal computer, smart phone, or the like), the determination means **122** receives the report via the interface unit **110** and determines that the member is in a specific state based on the report. Alternatively, the determination means **122** determines that a member within an organization is in a specific state based on an action of the member captured by using a camera, microphone, or the like. For example, the determination means **122** determines that a member within an organization is in a bad state based on a negative utterance of the member captured using a microphone. At this time, the determination means **122** can analyze the action of the member within the organization by using a known technology such as motion recognition technology, voice recognition technology, or natural language processing technology.

Examples of a report indicating that a member within an organization is in a state among a plurality of states include a report indicating that a member within an organization is in a good state and a report indicating that a member within an organization is in a bad state. A plurality of states can be, for example, a plurality of states encountered by a member at work. As shown in Figure **2A****,** examples thereof include, but are not limited to, "state of having trouble with handling of a duty as planned", "state where a duty is handled smoothly in terms of handling of duty as planned", "state of having trouble with how a duty is performed or handled", "state where a duty is handled smoothly in terms of how a duty is performed or handled", and the like.

The obtaining means **123** obtains evaluation by a first person on past communications to the first person. The obtaining means **123** can be configured, for example, to obtain evaluation stored in the database unit **200** from the database unit **200,** or to obtain evaluation by receiving evaluation transmitted from outside of the system **100.**

The first person can be a person within the same organization as the member within the organization, or a person outside of the organization. If the first person is a person outside of the organization, the first person can be, for example, a person within an organization in the same industry or a person within an organization with the same job category as the organization.

In this regard, the first person is preferably, for example, a person with the same or similar characteristic as a member within an organization because, by taking into consideration the type of communication a person with the same or similar characteristic has felt good or bad, an advice outputted from the computer system **100** of the invention can be more suitable for a member of an organization with a specific characteristic. As used herein, similar characteristics refer to characteristics, when represented by a numerical value, which have a difference in numerical values within a given range. If, for example, a characteristic is subdivided into a plurality of items and each item is represented by a numerical value (e.g., if a characteristic is represented by a radar chart as shown in Figure **1B****),** similar characteristics can be, for example, characteristics with differences in numerical values of each item that are each within a given range; or characteristics with a given number of differences, among differences in the numerical values of each item, that are within a given range; or characteristics with a maximum difference, among differences in numerical values of each item, that is equal to or below of given threshold value. A given range can be appropriately determined, which can be, for example, ±1% to ±20% from a numerical value, such as ±1%, ±5%, ±10%, ±15%, or ±20% from a numerical value or the like.

A past communication to a first person is preferably a past communication to the first person in the same state as the state a member within an organization is in, which is determined by the determination means **122** because, by taking into consideration the type of communication a person who has received a communication in the same state has felt good or bad, an advice outputted from the computer system **100** of the invention can be more suitable for a member of an organization in a specific state.

For example, the obtaining means **123** obtains evaluation of a communication received in the past inputted by a first person into the person's own terminal apparatus (e.g., personal computer, smart phone, or the like) via the interface unit **110.** In this regard, the first person can be a member within an organization or a person who is different from the member within the organization (e.g., another member within the organization or a user outside of the organization). For example, a communication received in the past by the first person can be a communication from a second person with the same or similar characteristic as a person provided with an advice by the computer system **100** (e.g., manager who manages the member within the organization or another member within the organization). The second person can be, for example, the person who is provided with an advice by the computer system **100** or another person (e.g., user outside of the organization). If the second person is another person, the second person needs to be a person who can communicate with the first person.

If, for example, the obtaining means **123** obtains evaluation transmitted from outside of the system **100,** the obtaining means can be configured to obtain information showing evaluation as well as a characteristic of a first person, state of the first person, and communication received by the first person. Evaluation obtained by the obtaining means **123** can be stored in the database unit **200** after being associated with the characteristic of the first person, state of the first person, and communication received by the first person. For example, the obtaining means **123** can also be configured to receive a characteristic of a second person. Evaluation obtained by the obtaining means **123** can be stored in the database unit **200** after being associated with the characteristic of the first person, state of the first person, and characteristic of the second person, as well as the communication received by the first person.

The outputting means **124** processes information and provides a specific output. An output from the outputting means **124** can be outputted to an element that is external to of the computer system **100** via the interface unit **110.**

For example, the outputting means **124** provides an output based on a characteristic of a member of an organization provided from the receiving means **121,** a state of the member of the organization provided from the determination means **122,** and evaluation provided from the obtaining means **123.** At this time, the outputting means **124** can output an advice on a communication with the member within the organization in the state determined by the determination means **122.** The advice on a communication can include, for example, at least one of what a communication that is effective for the member within the organization in a specific state is and what a communication that is ineffective for the member within the organization in a specific state is. The outputting means **124** can output information on a member who inputted a report received by the determination means **122,** such as the number of members or member name.

As described above, the processing unit **120** can comprise the second determination means (not shown).

The second determination means receives data inputted into the computer system **100** via the interface unit **110** from the interface unit **110** and determines a characteristic of a member or manager within an organization from the data. For example, the second determination means determines a characteristic of a member or manager within an organization with respect to at least four viewpoints. The four viewpoints can be, for example, the characteristic of desire, characteristic of intracranial transmitter, characteristic of preference, and characteristics of how a member or manager within an organization feels stress described above in reference to Figures **1B** and **1C****.** The second determination means can also be configured to determine a characteristic of a member or manager within an organization from another viewpoint instead of, or in addition to, the four viewpoints described above.

Data provided to the second determination means can be, for example, data indicating a response to a question to a user shown in Figure **1A** or data indicating an action of a member or manager within an organization. For example, data indicating the action of a member or manager within an organization can be extracted from data captured with a camera or a microphone. Extraction of data indicating the action of a user from data captured with a camera or a microphone can be accomplished using, for example, a known movement recognition technology, voice recognition technology, natural language processing technology, or the like.

Each constituent element of the computer system **100** described above can be comprised of a single hardware part or a plurality of hardware parts. If comprised of a plurality of hardware parts, each hardware part can be connected in any mode. Each hardware part can be connected wirelessly or by wired connection. The computer system **100** of the invention is not limited to a specific hardware configuration. The processing unit **120** comprised of an analog circuit instead of a digital circuit is also within the scope of the invention. The configuration of the computer system **100** of the invention is not limited to those described above, as long as the function thereof can be materialized.

### 3. Processing by computer system 100

Figure **4** shows an example of processing **400** performed in the computer system **100** for providing an advice on a communication. The computer system **100** can provide an advice on what type of communication should be made with a member within an organization in a specific state by performing the processing **400.** For example, an advice can be provided to a manager of an organization or another member within the organization. This allows shortcomings in communication between a member within an organization and a manager or another member within an organization to be resolved, and suitable communication to be made based on an objective analysis.

At step **S401,** the receiving means **121** of the processing unit **120** receives characteristics of a member of an organization. The receiving means **121** can receive characteristics of a member of an organization inputted via the interface unit **110,** or the receiving means **121** can receive characteristics of a member of an organization determined by the second determination means based on data inputted via the interface unit **110.**

For example, characteristics of a member of an organization can have at least four viewpoints. The four viewpoints can be, for example, the characteristic of desire, characteristic of intracranial transmitter, characteristic of preference, and characteristic of how the member of the organization feels stress. For example, a characteristic of the member of the organization can be configured to be inputted via the interface unit **110** for at least four viewpoints, or determined for at least four viewpoints by the second determination means. For example, the second determination means determines a characteristic of a member of an organization using a correspondence table that associates data inputted via the interface unit **110** with at least four viewpoints.

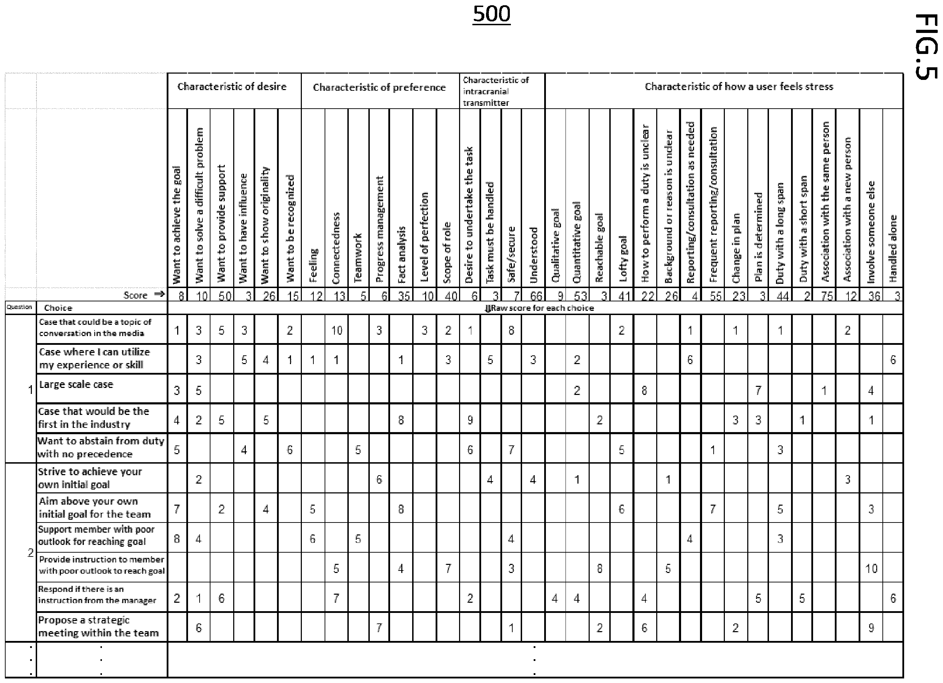

Figure 5 is an example of a correspondence table **500** for determining a characteristic of a member of an organization.

The correspondence table **500** associates the choices for each question in the survey table **10** shown in Figure **1A** with characteristics of a member with respect to four viewpoints. Choices for each question are indicated in the vertical columns, and characteristics of a member with respect to four viewpoints are indicated in the horizontal rows.

Each of the four viewpoints is further divided into a plurality of items. For example, a characteristic of desire is further divided into 6 items such as "Want to achieve the goal" and "Want to solve a difficult problem". For example, a characteristic of preference is further divided into 7 items such as "Feeling" and "Connectedness". These items can correspond to, for example, items displayed on the second display section **22,** the third display section **23,** the fifth display section **25,** and the sixth display section **26** in Figures **1B** and **1C****.**

The correspondence table **500** is configured so that a raw score for each item is assigned to choices for each question, and raw scores are added for each item in accordance with a choice for each question. For example, if a user answers "Case that could be a topic of conversation in the media" to question 1, the raw score assigned to the choice "Case that could be a topic of conversation in the media" is added to each item. If a user answers "Propose a strategic meeting within the team" to question 2, the raw score assigned to the choice "Propose a strategic meeting within the team" is added to each item. In this manner, the score for an item is computed by adding raw scores assigned to response choices for all questions, and a characteristic of a member can be determined by the score distribution of each item. Scores can be computed more accurately with weightings that takes into consideration ease of gaining scores when adding raw scores. A raw score is assigned to each choice for each question while being associated with multiple items. This can reduce biased responses that are given by a member while being cognizant of a proper response or recommended response, so that a characteristic of the member can be determined with higher accuracy.

Assignment of raw scores in the correspondence table **500** can be changed for each organization or constant for each organization. The assignment can be configured to vary over time depending on the state of an organization or to remain constant. Raw scores should be assigned so that choices for a question suitably correlate with each item.

The example shown in Figure 5 describes that choices for each question in the survey table **10** shown in Figure **1A** are associated with four viewpoints, but what is associated with four viewpoints is not limited to choices for each question. Anything can be associated with four viewpoints, as long as a member characteristic can be determined from data that can be inputted via the interface unit **110.** For example, an action of a member can be associated with four viewpoints. For example, a raw score for each item can be assigned to a specific remark, specific action, or the like of a member. This enables, for example, observing a member using a camera or a microphone, and adding a raw score assigned to a specific remark when the specific remark is recognized and adding a raw score assigned to a specific action when the specific action is recognized to compute a score for the item, so that a characteristic of a member of an organization can be determined by a score distribution of each item.

The above characteristic of a member within an organization is one example. Any other characteristic can be used as a characteristic of a member within an organization.

Referring again to Figure **4****,** the determination means **122** of the processing unit **120** determines that a member within an organization is in a state among a plurality of states at step **S402.** The determination means **122** of the processing unit **120** can determine that a member within an organization is in a state among a plurality of states in response to an input of a report indicating that the member within the organization is in a state among a plurality of states into the computer system **100** via the interface unit **110.**

A report indicating that a member within an organization is in a state among a plurality of states can be inputted, for example, by selecting the selection section **32** in the report screen **30** shown in Figure **2**. A report can be, for example, inputted by a member within an organization themselves, inputted by another member within the organization, or inputted by a manager within the organization.

For example, the determination means **122** can determine that a member within an organization is in a specific state based on the action of the member captured using a camera, microphone, or the like.

At step **S403,** the obtaining means **123** of the processing unit **120** obtains evaluation by a first person on past communications to the first person. The obtaining means **123** can be configured to, for example, obtain evaluation stored in the database unit **200** from the database unit **200,** or obtain evaluation by receiving evaluation transmitted from outside of the system **100.**

In this regard, a first person is preferably, for example, a person with the same or similar characteristic as a member within an organization. Further, a past communication to the first person is preferably a past communication to the first person in the same state as the state the member within the organization is in determined by the determination means **122,** because past communication of a person corresponding to the state and characteristic of a member within an organization can be referenced, so that an advice provided by the system **100** can be more suitable to the state and characteristic of the member of the organization.

When a communication is received, a first person can evaluate whether the communication is good or bad. Evaluation can be, for example, two level evaluation such as good or bad, or useful or not useful. A communication can also be evaluated by more than two levels. Evaluation can be considered high evaluation if better than the median evaluation or lower evaluation if worse than the median evaluation.

In this regard, the first person can be a member within an organization or a person who is different from the member within the organization (e.g., another member within the organization or a user outside of the organization). For example, a communication received in the past by the first person can be a communication from a second person with the same or similar characteristic as a person provided with an advice by the computer system **100** (e.g., manager who manages a member within an organization or another member within the organization). The second person can be, for example, the person who is provided with an advice by the computer system **100** (e.g., manager) or another person (e.g., user outside of the organization). If the second person is another person, the second person needs to be a person who can communicate with the first person.

At step **S404,** the outputting means **124** of the processing unit **120** outputs an advice on a communication to a member within an organization in a determined state based on the characteristic of the member within the organization received at step **S401,** state determined at step **S402,** and evaluation obtained at **S403.** The outputting means **124** can, for example, output an advice to the outside of the computer system **100** via the interface unit **110.**

For example, the outputting means **124** references communication stored in the database unit **200** and obtains a communication associated with both the state determined at step **S402** and the characteristic of a member received at step **S401** from the database unit. At this time, evaluation on the communication can be referenced to output at least one of an advice stating that a communication with good evaluation is a communication that is effective for a member within an organization, and an advice stating that a communication with poor evaluation is a communication that is ineffective for the member within the organization. If, for example, there are a plurality of communications that have been obtained, the outputting means **124** can reference evaluation and rearrange such communications in descending order or ascending order of evaluation and output the communications as a communication that is effective for a member within an organization, or rearrange such communications in descending order or ascending order of evaluation and output the communications as a communication that is ineffective for a member within an organization. Alternatively, the outputting means **124** can, for example output only communications with evaluation that is higher or lower than a given threshold value as a communication that is effective for the member in the organization or a communication that is ineffective for the member in the organization.

If, for example, a communication is stored after being associated as shown in Figure **3B** in the database unit **200**, the outputting means **124** can be configured to reference the stored evaluation and output "Proactively engage in conversion", "Give praise even for trivial matters", or "Compare with another member" in this order as a communication that is effective for a member within on organization, or output only "Proactively engage in conversion" or "Give praise even for trivial matters" which have high evaluation of 60% or higher as a communication that is effective for the member within the organization, when the member within the organization in a state of "Having trouble handling a duty as planned" has a characteristic of desire of "Want to achieve the goal".

For example, the outputting means **124** can be configured to obtain a communication evaluated as bad by a first person with a completely opposite characteristic from a characteristic of a member of an organization from the database unit **200** and output the communication as a communication that is effective for the member of the organization.

An advice outputted in this manner can be displayed, for example, on the first advice display section **42** or the second advice display section **43** of the notification screen **40** shown in Figure **2B****.** For example, a communication that is effective for a member within an organization can be displayed on the first advice display section **42** of the notification screen **40** shown in Figure **2B****,** and a communication that is ineffective for a member within an organization can be displayed on the second advice display section **43** of the notification screen **40** shown in Figure **2B****.**

In this manner, an advice as to what type of communication should be established with a member in a specific state can be provided by providing an advice on a communication with a member within an organization based on the state the member within the organization is in, characteristic of the member within the organization, and evaluation on a communication. Since a past communication and evaluation thereof in particular are considered, an advice on a communication based on past success or failure of self or others would be provided. Furthermore, if a first person is a person having the same or similar characteristic as a member within an organization, an advice that is more suited to the characteristic of the member within the organization would be provided. If a past communication to the first person is a past communication to the first person in the same state as the state the member within the organization is in, an advice that is more suited to the state of the member within the organization would be provided. In this manner, the computer system **100** of the invention can provide an advice on the method of optimal communication to each single member. This enables a manager of an organization to receive an advice based on objective analysis instead of an indefinite variable element such as a rule of thumb, feeling, or subjective understanding, so that a suitable communication can be established with a member within the organization. This makes communication between a manager within an organization and a member within the organization smooth, promotes cooperation by members within the organization, and leads to improved efficiency. This can also promote efficient management of an organization.

The above example describes that an advice is outputted as a communication that is effective or a communication that is ineffective for a member within an organization, but the mode of output is not limited thereto. For example, a communication that is effective for a member within an organization can be outputted as "response by another manager that should be mimicked", and a communication that is ineffective for a member within an organization can be outputted as "response by another manager that should not be mimicked". A "communication that is effective for a member within an organization" outputted by the outputting means **124** is a communication with high evaluation among communications established by another manager in another manager-member having the same characteristic relationship as the relationship between manager-member within an organization. This can be considered as a response that should be mimicked by a manager within the organization. Likewise, a "communication that is ineffective for a member within an organization" outputted by the outputting means **124** is a communication with low evaluation among communications established by another manager in another manager-member having the same characteristic relationship as manager-member within the organization. This can be considered as a response that should not be mimicked by a manager within the organization.

The processing **400** was described as performing step **S402** and step **S403** after step **S401,** but the order of step **S401** to step **S403** is not limited thereto. For example, step **S401** can be configured to be performed after step **S402.**

Figure **6** shows another example of processing (processing **600**) performed in the computer system **100** for providing an advice on a communication. Processing **600** is different from processing **400** in terms of providing an advice based on a characteristic of a manager within an organization in addition to a characteristic of a member within the organization. The computer system **100** can provide an advice of what communication should be established with a member within an organization in a specific state to a manager of the organization by performing processing **600**. This allows shortcoming in communication between a member within an organization and a manager within the organization to be resolved, and suitable communication to be made based on an objective analysis.

At step **S601,** the receiving means **121** of the processing unit **120** receives characteristics of a member of an organization. Step **S601** is the same processing as step **S401.**

At step **S602,** the determination means **122** of the processing unit **120** determines that a member within an organization is in a state among a plurality of states. Step **S602** is the same processing as step **S402.**

At step **S603,** the receiving means **121** of the processing unit **120** receives characteristics of a manager of an organization. The receiving means **121** can receive a characteristic of a manager of an organization inputted via the interface unit **110,** or the receiving means **121** can receive a characteristic of the manager of the organization determined by the second determination means based on data inputted via the interface unit **110.**

For example, characteristics of a manager of an organization can have at least four viewpoints in the same manner as characteristics of a member of the organization. The four viewpoints can be, for example, the characteristic of desire, characteristic of intracranial transmitter, characteristic of preference, and characteristic of how the manager of the organization feels stress. For example, characteristics of a manager of an organization can be configured to be inputted via the interface unit **110** for at least four viewpoints, or to be determined for at least four viewpoints by the second determination means. For example, the second determination means can determine a characteristic of a manager of an organization using a correspondence table that associates data inputted via the interface unit **110** with at least four viewpoints, in the same manner as for a characteristic of a member of an organization.

At step **S604,** the obtaining means **123** of the processing unit **120** obtains evaluation by a first person on past communications to the first person. Step **S604** is the same processing as step **S403.**

At step **S605,** the outputting means **124** of the processing unit **120** outputs an advice on a communication to a member within an organization in a determined state based on the characteristic of the member within the organization received at step **S601,** state determined at step **S602,** characteristic of a manager within the organization received at step **S603,** and evaluation obtained at **S604.** The outputting means **124** can, for example, output an advice to the outside of the computer system **100** via the interface unit **110.**

For example, the outputting means **124** references communications stored in the database unit **200** and obtains a communication associated with all of the state determined at step **S602,** the characteristic of a member received at step **S601,** and the characteristic of a manager received at step **S603** from the database unit. At this time, evaluation on the communication can be referenced to output at least one of an advice stating that a communication with good evaluation is a communication that is effective for a member within an organization, and an advice stating that a communication with poor evaluation is a communication that is ineffective for the member within the organization. If, for example, there are a plurality of communications that have been obtained, the outputting means **124** can reference evaluation and rearrange such communications in descending order or ascending order from high evaluation and output a communication as a communication that is effective for a member within an organization, or a communication that is ineffective for a member within an organization. Alternatively, the outputting means **124** can, for example, output only communications with evaluation that is higher or lower than a given threshold value as a communication that is effective for the member within the organization or a communication that is ineffective for the member within the organization.

An advice outputted in this manner can be displayed, for example, on the first advice display section **42** or the second advice display section **43** of the notification screen 40 shown in Figure **2B**. For example, a communication that is effective for a member within an organization can be displayed on the first advice display section **42** of the notification screen **40** shown in Figure **2B**. A communication that is ineffective for a member within an organization can be displayed on the second advice display section **43** of the notification screen **40** shown in Figure **2B**.

In this manner, an advice as to what type of communication should be established with a member in a specific state can be provided with high accuracy by providing an advice on a communication with a member in an organization based on the state the member within the organization is in, characteristic of the member within the organization, characteristic of a manager within the organization, and evaluation on a communication. Since a past communication and evaluation thereof in particular are considered, an advice on a communication based on past success or failure of self or others would be provided. Furthermore, if a first person is a person having the same or similar characteristic as a member within an organization, an advice that is more suited to the characteristic of the member within the organization would be provided. If a past communication to the first person is a past communication to the first person in the same state as the state the member within the organization is in, an advice that is more suited to the state of the member within the organization would be provided. This enables a manager of an organization to receive an advice based on objective analysis instead of an indefinite variable element such as a rule of thumb, feeling, or subjective understanding, so that a suitable communication can be established with a member within the organization. This makes communication between a manager within an organization and a member within the organization smooth, promotes cooperation by members within the organization, and leads to improved efficiency. This can also promote efficient management of an organization.

The processing **600** was described as performing step **S602,** step **S603,** and step **S604** after step **S601,** but the order of step **S601** to step **S604** is not limited thereto. For example, step **S601** can be configured to be performed after step **S602,** or step **S602** and step **S601** can be configured to be performed after step **S603.**

The examples described above with reference to Figures **4** and **6** describe that processing at each step shown in Figures **4** and **6** is materialized by the processing unit **120** and a program stored in the memory unit **130,** but the present invention is not limited thereto. At least one of the processing at each step shown in Figures **4** and **6** can be materialized by a hardware configuration such as a control circuit.

The present invention is not limited to the aforementioned embodiments. It is understood that the scope of the present invention should be interpreted solely from the scope of the claims. It is understood that those skilled in the art can implement an equivalent scope, based on the descriptions of the invention and common general knowledge, from the descriptions of the specific preferred embodiments of the invention.

### [Industrial Applicability]

The present invention is useful as an invention providing a computer system, program, or method for providing an advice on a communication, which is capable of making improvements to shortcomings in communication.

### [Reference Signs List]

- **10**: Survey table
- **20-1, 20-2**: Result display screen
- **30**: Report screen
- **40**: Notification screen
- **100**: Computer system
- **110**: Interface unit
- **120**: Processing unit
- **121**: Receiving mean
- **122**: Determination means
- **123**: Obtaining means
- **124**: Outputting means
- **130**: Memory unit
- **200**: Database unit

## Claims

1. A computer system for providing an advice on a communication, comprising:
receiving means for receiving a characteristic of a member within an organization;
determination means for determining that the member is in a state among a plurality of states;
obtaining means for obtaining evaluation by a first person on past communications to the first person; and
outputting means for outputting an advice on a communication to the member in the state based on the state, the characteristic of the member, and the evaluation.

2. The computer system of claim 1, wherein the first person has a characteristic that is identical or similar to the member in the organization.

3. The computer system of claim 1 or 2, wherein the past communications to the first person are past communications to the first person in the same state as the state.

4. The computer system of any one of claims 1 to 3, wherein the outputting means obtains a communication associated with both the state and the characteristic of the member and outputs at least one of an advice stating that a communication among the obtained communications for which the evaluation is good is a communication that is effective for the member, and an advice stating that a communication among the obtained communications for which the evaluation is bad is a communication that is ineffective for the member.

5. The computer system of claim 4, wherein the outputting means rearranges and outputs the communications in ascending or descending order of the evaluation.

6. The computer system of any one of claims 1 to 5,
wherein the computer system further comprises second receiving means for receiving a characteristic of a manager within the organization,
wherein the outputting means outputs, to the manager, an advice on a communication to the member in the state based on the state, the characteristic of the member, the characteristic of the manager, and the evaluation.

7. The computer system of claim 6, wherein the past communications to the first person were established by a second person, and the second person has a characteristic that is identical or similar to the manager.

8. The computer system of any one of claims 1 to 7, wherein the determination means is configured to:
receive a report showing that the member is in a state among a plurality of states from another member within the organization; and
determine that the member is in a state among a plurality of states based on the received report.

9. The computer system of any one of claims 1 to 7, wherein the determination means is configured to determine that the member is in a state among a plurality of states based on an action of the member.

10. A program for providing an advice on a communication, wherein the program is executed in a computer system comprising a processing unit, and the program causes the processing unit to execute processing comprising:
receiving a characteristic of a member within an organization;
determining that the member is in a state among a plurality of states;
obtaining evaluation by a first person on past communications to the first person; and
outputting an advice on a communication to the member in the state based on the state, the characteristic of the member, and the evaluation.

11. A method for providing an advance on a communication, wherein the method is executed in a computer system comprising a processing unit, and the method comprises:
receiving a characteristic of a member within an organization;
determining that the member is in a state among a plurality of states;
obtaining evaluation by a first person on past communications to the first person; and
outputting an advice on a communication to the member in the state based on the state, the characteristic of the member, and the evaluation.
